# EUROPEAN PATENT APPLICATION

(11) **EP 4 108 632 A1**
(43) Date of publication of application: **28.12.2022**
(21) Application number: 21181486.8
(22) Date of filing: 24.06.2021
(51) Int. Cl.: C01B 32/16, C01B 32/164, C01B 32/186

(54) **DEVICE, IN PARTICULAR PE CVD APPARATUS FOR CONTINUOUS PRODUCTION OF HIGH_PERFORMANCE CARBON THREAD**

(71) Applicant: Aida AS, 1394 Nesbru (NO)
(72) Inventor: Jakobsen, Marius A., 4326 Sandnes (NO); Datsyuk, Vitaliy, 94227 Zwiesel (DE); Liehr, Michael, 63654 Büdingen (DE)
(74) Representative: Maikowski & Ninnemann Patentanwälte Partnerschaft mbB

(57) **Abstract**

The present invention relates to a device (10) and a process for producing carbon nanotubes, graphene and/or a combination thereof, said device comprising: at least one first chamber (11) for cleaning a substrate (15) using plasma cleaning; at least one second chamber (12) for coating the substrate (15) with at least one accelerator fluid and/or optionally at least one catalyst; at least one third chamber (13) for growing carbon nanotubes on the coated substrate (15), and at least one fourth chamber (14) for collecting the carbon nanotubes from the substrate (15) and optionally spinning the carbon nanotubes into a yarn, wherein the chambers (11-14) are arranged to each other around a vertical or horizontal axis of symmetry, wherein the substrate (15) is arranged on a support structure (16) that is able to rotate around said axis such that the substrate (15) is transported subsequently through each of the chambers (11-14) during one full rotation of the support structure (16).

## Description

The present invention relates to device and a method and an apparatus for producing high performance carbon nanotube array, graphene and/or a combination thereof and the product obtained by such a process.

### Description

Carbon is one of the most important elements for all living beings. Carbon is a non-metallic chemical element often regarded as a common element of all known life. It is the 15th most abundant element in the Earth's crust, and the fourth most abundant element in the universe by mass. Carbon can be found in many forms, each of which has its own physical characteristics. These forms include well-known materials like diamond and graphite, that only differ in physical properties due to variations in the arrangement of atoms in their structures. Other, less well-known forms are fullerenes - spherical, closed-cage fullerenes are called Buckminster-fullerenes, or "Buckyballs," and cylindrical fullerenes are called nanotubes. Another form, composed only of carbon atoms in a flat, 2D lattice structure is called graphene. Other forms of carbon atoms arrangements exist like amorphous carbon, Q-carbon and more.

Carbon is the basic ingredient of all organic life forms on this planet.

Although carbon has been used as coal for thousands of years, Antoine Lavoisier had shown us that it was a chemical entity in 1772. Carbon is non-metal and can bind itself with many other chemical elements. It is estimated that over ten million compounds can be formed when carbon binds with other elements. Pure carbon can be found in five major forms: Diamonds, Nanotubes, Graphene, Graphite and Fullerenes. Of these five carbon elements Graphene and nanotubes are two of the strongest materials known to man.

Carbon nanotubes (CNTs) are the cylindrical carbon allotrope nanostructures fortuitously discovered by Japanese physicist Sumio lijima while he was studying the surface of graphite electrodes in an electric arc discharge.

In 2004 Konstantin Novoselov and Andre Geim successfully isolated graphene and mapped its properties. There are two types of nanotubes, single wall nanotubes (SWCNT's) and multi wall nanotubes (MWCNT's). This is also the same with graphene, its either single layer graphene (SLG) or multi-layer graphene (MLG),

A carbon nanotube can be imagined of as a sheet of graphene (carbon arranged in a two-dimensional hexagonal pattern) rolled into a cylinder. Accordingly, CNTs can be used as a starting point for making graphene, by "unzipping" them. Both graphene and CNTs have exceptional mechanical and electronic properties, which are often similar. Hence, they are often regarded as rivals for a host of similar applications. It should be noted that there is also an area of research focused on combining graphene and CNTs and using them together for various application like electronics, batteries, sensors and more.

Despite these similarities between the materials, there are still differences between them. While graphene is considered 2D, CNTs are often regarded and 1D. Also, graphene (when ideally structured with atom purity and perfect honeycomb lattice) is a zero-band-gap semiconductor, whereas single-walled CNTs show either metallic or semiconducting properties, with a bandgap that varies from zero to about 2 eV.

Working with CNTs is often considered challenging due to the intrinsic difficulty in positioning them accurately and connecting them. Graphene, which came into the scene later than veteran CNTs, can be easier to interconnect and dope, but carries its own set of challenges, like extraction, manipulation and stability burdens.

Graphene is a single 2 dimensional layer of graphite. So, graphene is basically a sheet of carbon atoms arranged in a hexagonal layout. Graphene is considered the first 2D material ever discovered, and is also called a "wonder material" thanks to an impressive number of enormous properties it shows. For example, graphene is one of the strongest materials in universe, has superior thermal and optical properties, excellent tensile strength, relative transparency, amazing electrical conductivity, and is impermeability to most gases and liquids and more.

Graphene's many attributes make it an attractive material for researchers and developers, who are working hard all over the world to find endless uses for the material. Graphene's use is vast and the applications include touchscreens (for LCD or OLED displays), computer chips, batteries, energy generation, supercapacitors, medical equipment, water filters, solar cells and more.

Carbon nanotubes (often abbreviated to CNTs) are cylindrically shaped molecules made of carbon atoms. A sheet of graphene can be rolled-up to make a carbon nanotube. CNTs can be single-walled (SWCNT) if made from one layer of carbon atoms, or multi-walled (MWCNT) when consisting of several layers of graphene sheets. In fact, carbon nanotubes come in various diameters, lengths, and functional groups which can tailor their use for specific applications.

Both graphene and CNTs have held a fundamental role in the field of nanotechnology due to their unique structural, mechanical and electronic properties. The biggest drawback in the SWCNT'S synthesis is a low yield of the production of nanotubes. It requires the additional, very expensive and time-consuming stages of purification and sorting. A.M.Cassell (Cassell et al., J. Phys. Chem. B 1999, 103, 6484-6492) reported the increase of the production yield from 16 to 31 % wt. after 45 min of CH₄ CVD (Chemical Vapour Deposition) by optimizing the chemical compositions and textural properties of the catalyst material. Flahaut proposed applying the solid solution method in the catalyst production (Flahaut et al.,J. Mater. Chem., 2000,10, 249-252).

The difference in the nanotube's diameters is caused by spontaneous catalyst deposition with differences in the size of catalyst caps. The substrate preparation of the invention has significant advantages, so that the catalyst particles are controllably drowned onto the substrate allowing defining the nanotube diameter and growing density per square cm. The goal in nanotube synthesis is to be gaining control over geometrical aspects of nanotubes, such as size, location and orientation, and the atomic structure of nanotubes including helicity and diameter.

Once the growth mechanisms of SWCNT or MWCNT are understood and controlled it should be possible to remove those carbon nanotubes from the surface they grew on. It has been discovered, that a single carbon nanotube out of a "forest" of mutually aligned carbon nanotubes that will be mechanically removed from the surface interacts with neighbouring carbon nanotubes in such a way that they are also pulled off the surface when that original carbon nanotube is removed.

In 2004 Ken Atkinson demonstrated to researchers at the Nanotech Institute of the University of Texas at Dallas (UTD) that carbon nanotubes if grown dense on a substrate (also called an array) and to a certain height, the array could be pulled of the substrate as a web and twisted into a yarn in the same way as conventional fibres like wool and cotton, but when nanotubes are assembled into fibers, their strength becomes impaired by defects, impurities, random orientations, and discontinuous lengths of the nanotubes as well as weak Van der Waals.

It is a distance-dependent interaction between atoms or molecules. Unlike ionic or covalent bonds, these attractions do not result from a chemical electronic bond; they are comparatively weak and therefore more susceptible to disturbance. The Van der Waals force quickly vanishes at longer distances between interacting molecules. Fabricating CNT fibers with strength reaching that of a single CNT has been an enduring challenge. Although CNT yarns have a great potential to revolutionize our future, it can only be possible by improving their essential material properties such as tensile strength and electrical conductivity.

There are reports showing that there have been fabricated CNT yarns with strengths as high as ∼9 GPa at small gauge lengths of ∼1 mm, however, strengths of only about ∼1 GPa were reported at the longer gauge length of 20 mm. The reason why fiber strengths have been low compared to the strength of individual CNTs is due to a failure to effectively transfer load to the constituent (discontinuous) CNTs within the fibre.

The suggested method is focused on utilizing a combination of the strength of nanotubes and graphene, by embedding the catalyst particles to the substrate and connecting them with a small "sharp" edge creating vertical graphene catalyst particles, thus binding/embedding nanotubes together by this combination of substrates with catalyst particles and sharp edges. The proposed method can be also used to produce other products such as but not limited to carbon flowers, nanotube bundles, diamond ribbons, and synthetic diamonds as examples.

The proposed method is eliminating the failure to effectively transfer load to the constituent (discontinuous) CNTs within the fiber, defects, impurities, random orientations, and discontinuous lengths and binding the nanotubes with vertical graphene. Various forms of carbon fibers, filaments, and multiwalled nanotubes have been synthesized by Chemical Vapor Deposition (CVD)

CVD is a multifaceted procedure currently used for several applications such as fabrication of coatings, powders, fibers and uniform components. Metals, composites of non-metallic materials such as carbon nanotubes, graphene, diamonds and other products such as silicon, carbides, nitrides, oxides to mention a few can be deposited through CVD.

In the CVD technique, at least one precursor (gas) flows into a vacuum chamber, impacting the pre-heated substrates surface to be coated. The deposition depends on the type of substrate, gas mixture, pressure, and temperature. A deposition of thin films on the surface occurs due to the chemical reaction on the hot substrate surface. This procedure can be defined as an atomic process in which the primary species deposited are atoms or molecules or a combination of both.

There are many derivative techniques, arising from CVD, such as plasma enhanced CVD (PECVD). PECVD is a variant of the CVD process in which a gas plasma is used for the deposition of thin films. The plasma used in the PECVD technique allows the use of a wide range of precursors, both organic and inorganic due to reactivity of the plasma without the need to have the substrate at an elevated temperature. Plasma is a partially or fully ionized gas and is generally a mixture of electrons, ions and neutral atoms and molecules. In a PECVD process an external energy source is required for the ionization of atoms and molecules (creation of plasma), usually a pressure reduction (vacuum) system and a reaction chamber. The common way to plasma production is the utilization of electromagnetic energy at various frequencies that can be roughly categorized in acoustic frequency (10 or 20 kHz), radio frequency (13.56 MHz) and microwave frequency (2.45 GHz), and this can cause of different properties to be produced.

When a gas or liquid precursor with high vapor pressure is introduced into the PECVD reaction chamber dissociation and activation of the precursor will occur in the presence of the plasma, which results in the deposition at much lower substrate temperatures compared to CVD.

The morphology of the deposited films generally depends on various parameters such as plasma power, pressure, mass flow rates of precursor material and substrate temperature. It is even possible to polymerize typical monomers in a plasma discharge but not with the same quality as conventional polymerization induced by heat.

CVD processes are often used to produce carbons of different varieties from graphene to nanotubes and various other carbon films.

Carbon nanotubes are one of the strongest and stiffest materials yet discovered (exempt from graphene) in terms of tensile strength and elastic modulus. This strength is due to covalent sp² bonds formed between the individual carbon atoms. A multi-walled carbon nanotube was tested to have a tensile strength of 63 gigapascals (9,100,000 psi).

Unlike graphene, which is a two-dimensional semimetal, carbon nanotubes show either metallic or semiconducting properties along the tubular axis

General experience is that low temperature CVD (600-900 °C) provides MWCNTs, while high temperature (900-1200°C) reaction favors SWCNT growth. This indicates that SWCNT has higher formation energy (presumably due to small diameter, high curvature carries high load energy).

Perhaps that is why MWCNT is easier to grow (than SWCNT) from most hydrocarbons, while SWCNT grows from selected carbon containing gases and hydrocarbons (namely carbon monoxide, methane, etc. which have a reasonable stability in the temperature range 900-1200°C) Usually effective precursors of MWCNTs (namely acetylene, benzene, etc.) are unstable at higher temperature and lead to the deposition of large amounts of carbonated compounds other than nanotubes. In 2004, a highly effective synthesis of impurity-free SWCNTs was reported by water-assisted ethylene CVD on Si substrates (Hata et al., 2004). It was suggested that the controlled supply of water steam to the CVD reactor acted as a weak oxidation agent and selectively removed amorphous carbon without damaging the growing CNT's. Balancing the relative levels of ethylene and water was essential to maximize the life of the catalyst. Recently, however, it has been shown that a reactive etch such as water or hydroxyl radical is not required at all in cold wall CVD reactors if hydrocarbon activity is low (Zhong et al., 2009). These studies emphatically show that the carbon precursor plays a decisive role in CNT growth. Therefore, with the correct choice of CNT precursor and steam pressure, both the life of the catalyst and the CNT growth rate can be significantly increased; and, accordingly, both the yield and quality of CNT can be improved.

All carbon nanotube yarns produced to date consisted of relatively short carbon nanotubes, which did not specifically use the chemical link between adjacent carbon nanotubes to improve the yarn's strength. The resulting former art products cannot take advantage of the full benefits associated with carbon nanotubes. Nanotubes are most commonly used as structural reinforcement for carbon-fiber products. In this application, the tubes act somewhat like rebar does in a traditional concrete structure, where they add directional support along the larger, planar 'sheets' of carbon fiber. For example, while carbon nanotubes embedded in a polymer matrix add some multifunctional properties to the composite, such as vibration dispersion, the polymer does not add any enhanced property to the nanotube itself. In fact, it is usually difficult, if not impossible, to take advantage of the properties of the carbon nanotube, such as tensile strength, when they are spread in a polymer because of their inert surface. Thus, it was an object of the present invention to provide a carbon nanotube yarn having an improved yarn strength.

Accordingly, a device or apparatus for producing carbon nanotubes, graphene and/or a combination thereof, is provided in a first aspect, wherein the device comprises:
- at least one first chamber for cleaning a substrate using plasma cleaning;
- at least one second chamber for coating the substrate with at least one accelerator fluid and optional with at least one catalyst;
- at least one third chamber for growing carbon nanotubes on the coated substrate, and
- at least one fourth chamber for collecting the carbon nanotubes from the substrate and optionally spinning the carbon nanotubes into a yarn,
wherein the chambers are arranged to each other around a vertical or horizontal axis of symmetry,
wherein the substrate is arranged on a support structure that is able to rotate around said axis such that the substrate is transported subsequently through each of the chambers during one full rotation of the support structure.

In a second aspect a process for producing carbon nanotubes, graphene, or other forms of carbon and/or a combination thereof is provided using such a device or apparatus. Said process comprises:
- providing at least one substrate in the first chamber and cleaning the surface of the substrate by plasma cleaning;
- transporting / rotating the at least one substrate from the first chamber to the second chamber;
- coating the surface of the at least one substrate with at least one accelerator fluid and optional with at least one catalyst in the second chamber;
- transporting / rotating the at least one coated substrate from the second chamber to the third chamber;
- growing carbon nanotubes and/or graphene on the coated surface of the at least one substrate by applying plasma-enhanced chemical vapor deposition (PECVD) by adding at least one carbon-containing gas to the third chamber;
- transporting / rotating the at least one substrate from the third chamber to the fourth chamber;
- collecting the grown carbon nanotubes and/ graphene from the substrate and optionally spinning the carbon nanotubes into a yarn or thread in the fourth chamber.

Thus, a device / apparatus is provided made of several chambers that enables to produce the carbon nanotube, wherein as an example but not limited to the nanotubes are linked by graphene sheets. These products can be collected and can be spun into a yarn or thread,

The substrate used for growing the carbon nanotubes is cleaned in the first chamber. For this purpose, a suitable gas for cleaning the substrate is pumped into the chamber at an appropriate pressure (0-1000 mTorr). Electromagnetic power is applied to the electrode above the substrate that causes an ionization of the gases, removing impurities.

The cleaned substrate then rotates to the second chamber. The second chamber is the coating reactor and there are two scenarios: The first scenario: If the substrate is "preprinted" or inoculated with a pattern of catalyst material the chamber will only be coated with accelerator fluid. The second scenario number: If the substrate is plane (without 3D printed pattern) the substrate can be coated with a sticky accelerator fluid and a catalyst metal/alloy that has been shown to act as a catalyst such as Ni, Fe, Co, or nonmetallic particles such as nano diamonds, quarts or a combination thereof.

The substrate then turns over to the third chamber number. The third chamber will be the growth chamber where the carbon nanotubes grow. The carbon-containing and reacting gases are introduced into the third chamber through a network of mass flow controllers allowing to regulate the flow rate and gas composition. As an example CH₄ or C₂H₂ can be used as carbon containimg gases and H₂ (100 sccm) and Ar (400 sccm) are introduced. Electromagnetic power is applied to the electrode above the substrate which causes a discharge and ionization of the gases, resulting in plasma formation at the desired vacuum pressure. The additional energy from heating the substrate and from the plasma causes decomposition of the gas into its components and the CNT array will grow. After the growth process is finished the gas flows are stopped, and the substrate is moved to the fourth chamber. The processes can take from minutes to hours depending on length and quality needed for end product or application.

Depending on the intended application, the system might also do "In-situ polymerization" in this stage that has advantages over other composite fabrication methods. A stronger interface can be obtained because it is easier to get intimate interactions between the polymer and carbons lattice during the growth stage than afterwards. The most common in situ polymerization methods involve as an example, but not limited to epoxy, wherein the monomer resins and hardeners are combined with CNTs prior to polymerizing in the catalyst fluid. The grown carbon array material exposed surface can be activated by ion bombardment and chemical reactions through radicals. Electrons of the atmosphere move towards the HF electrode during its positive voltage. The most established frequency of the HF electrode is 13.56 MHz.

The oscillating electromagnetic high frequency field between the life electrode and the surrounding ground ignites a plasma discharge with plasma electrons following the electric field pointing towards the life electrode during the positive half wave and away from the life electrode during the negative half wave. Positively charged ions are generally too heavy to follow the oscillating electromagnetic field and move slowly inside the plasma discharge. Electrons that hit either the surface of the life electrode or the grounded walls will be caught and cannot return into the plasma discharge. Therefore, an electric field builds up between the walls and the plasma which is called the sheath potential. To maintain electrical neutrality ions would have to move from the plasma towards the walls of both life electrode and gounded walls to compensate electrical charges. The neutralized atoms can subsequently return to the plasma discharge and may be ionized again.

The substrate rotates then into the fourth chamber. In the fourth chamber the grown carbon material will be collected with a device (most likely an electro spinner) or a rotating hook that is collecting and spinning the array to a yarn, it can also be compressed or turned in to bundles as an example in this camber. The process also might stop here if semiconductors are to be produced. The grown carbon material can also be pre-coated with a polymer and can contain a mixture of gasses such as argon, nitrogen, hydrogen for increasing the binding of the array as they are collected

The machine might have an extra heating chamber for treating the spun yarn with a high temperature heater that is using example boron gas to put them into physical contact with each other and treating the materials to provide fused structures with dense aggregations of covalent bonds connecting the nanoparticles to each other.

The machine might have a printing/hanging chamber that is printing the catalyst particles on the substrate or changing out the used substrates to new substrates

One embodiment takes advantage of the coalescence phenomenon observed when bundles of pure double-walled carbon nanotubes are heated to temperatures ranging from of 2100°C - 2500°C. Joints between the nanotubes in the thread represent a weakness but heating the thread has been found to increase the strength significantly, presumably through some sort of fusing of the individual tubes.

The yarn fuse by coalescence of their outer walls-forming structures containing two single-walled nanotubes enclosed by a single outer wall, graphene nanoplatelets, and other structures. Adding about 0.05% boron to double-walled carbon nanotubes resulted in similar fused structures linking the bundles and the formation of welded triple junctions and quadruple junction structures derived from intersecting double-walled carbon nanotubes heated at temperatures ranging from 1600° C.-2100° C. The advantage of using double-walled carbon nanotubes is that they coalesce without expensive radiation treatments. Heating them to weld them to each other into bulk materials is easier and cheaper.

The device and process are explained in the following in more detail.

### Substrate

As described above, the substrate is arranged on a support allowing the substrate to rotate around said axis such that the substrate is rotated and transported subsequently through each of the chambers.

The support may be designed in any shape, such as rotating square, and may be also described as base substrate.

The support may comprise an inbuilt heater, for example IR heater or magnetic heater, such that substrate can be heated.

In an embodiment the surface of the at least one substrate comprises sharp edges, in particular due to catalyst particles embedded in the surface of the substrate. The sharp edges or scratches on the top substrate serve nucleation and are required for growing carbon nanotubes and graphene on the substrate surface. For example, sharp edges on the substrate surface are promoted for the nucleation of vertical graphene.

In a further embodiment the substrate is provided with a preprinted surface, as will be described in more detail further below.

In a further embodiment at least one substrate is made of multiple layer of high temperature polymer, carbon fibers, metal, or metal alloys, quartz, silicon, silicon carbide, silica, alumina, alumino-silicate (zeolite), CaCO₃, magnesium oxide. The substrate can consist of any type of any material as long as it can withstand the stress and strain created by the environment inside the machine.

### First chamber: cleaning

As described above, the first chamber serves as a cleaning chamber using plasma cleaning. This is the process of removing all organic matter from the surface of an object using an ionized plasma gas preferably utilizing Tetrafluormethane CF₄ or Sulfur Hexafluoride (SF₆), oxygen and/or argon or hydrogen. Plasma cleaning does not require physical contact to the surface being cleaned.

Plasma is created by applying an electromagnetic power to an electrode located above the substrate that in turn causes activation and ionization of the gases, resulting in plasma formation and creating radicals. This process can vary from 2 seconds to 10 minutes, in particular between 30 seconds and 5 minutes depending on (plasma density).

The cleaning progress of the substrate can be validated by the use of but not limited to residual gas analyzer (RGA). When no impurities are left on the substrate surface, the gas and the plasma will be shut off.

Plasma cleaning has unique advantages compared to other cleaning processes
- Cleans even in the smallest cracks and holes
- Cleans all component surfaces in one working stage, including the inner of hollow bodies
- Residual removal of decomposition products in case of vacuum extraction
- No damage to solvent-sensitive surfaces of chemical cleaners
- Removes also molecularly fine residues
- Suitable for immediate further treatment. No ventilation or removal of solvents
- No storage and disposal of hazardous, polluting and harmful cleaning agents
- Very low process costs

### Second chamber: coating / spraying catalyst

As mentioned above, after leaving the cleaning chamber the substrate is moved into the second chamber for coating with at least one accelerator fluid and/or at least one catalyst.

The second chamber will coat the accelerator with pneumatic nozzles connected to a fluid reservoir and a pressure pump. The second pump can have several reservoirs containing different types of accelerator fluids.

Thus, according to one embodiment the second chamber comprises at least one nozzle, preferably at least pneumatic nozzle, for coating the at least one substrate with at least one accelerator fluid. In a further embodiment the at least one nozzle is connected to a fluid reservoir and a pressure pump.

In another embodiment ultrasonic spraying nozzles are applied.

Ultrasonic spraying nozzle, also known as ultrasonic atomization nozzle or ultrasonic nozzle, is an ultrasonic atomizer based on the principle of horn transducer. It is widely used in nano- and submicron functional coatings, ultrasonic spray pyrolysis, ultrasonic spraying and other fields due to their unique advantages. At the same time, the ultrasonic nozzle also has the advantages of smooth atomization particles, high precision, extremely low air pressure, high transmission efficiency of raw materials and not clogging, etc.

The accelerator is a high carbon source containing fluid, gas or vapor, that increases the speed of the chemical reaction or "accelerate" the growth or nucleation of either the graphene or nanotubes or a combination hereof. The accelerator fluid gas or vapor may be one of the following: benzene, ethanol, methanol, gasoline, propanol etc.

The catalyst is a substance that causes or accelerates a chemical reaction without itself being affected. The catalyst particles can be freestanding, imbedded on the substrate or consist in shape or patterns on the substrate, the shape can be any arbitrary geometrical shape or form in two dimensions such as: Triangle, Isosceles Triangle, Scalen, Equilateral, Quadrilaterals, Rectangle, Square, Parallelogram, Trapezoid, Polygons, Hexagon, Heptagon, Octagon, Nonagon, Decagon, Circle, Oval/Ellipse, Crescent, Arches, Frustum to mention a few examples but not limited to. The preferred forms are triangles, squares and polygons. It can also have shapes in form of tablets, extrudates, spheres, or irregularly shaped catalyst particles or a combination thereof, in both two dimensional (2D) and three dimensional (3D) whereas the 2D shapes and figures mainly consist of points "sharp edges" and connecting lines or "sharp edge". The catalyst particle can have a contact angle for water from 1 to 360 degrees to the substrate and can be imbedded from 0 to 180 degrees

Furthermore, at least one accelerator fluid may contain catalyst particles. The catalyst metal/alloy that have been shown to act as a catalyst for carbon nanotube and graphene growth are Ni, Fe, Co, or nonmetallic particles such as nano diamonds, quarts or a combination thereof; see further details below.

As mentioned previously, it is also possible that the surface of the substrate is "preprinted" or imbedded with a catalyst pattern. In this case the substrate surface will be only coated with accelerator fluid.

The 3D printing or imbedding of catalyst particles on the substrate allow for controlling a bonding between nanotubes and vertical graphene thus creating a unique combination. The catalyst particles (and sharp edges) can be deposited by either printed by but not limited to electro dipping, sputtering, grid, 3D printing, EBL, FIB as a circuit board .

By 3D printing the catalytic particles on the substrate it is possible to control the catalyst particle sizes ranging from 0.5 nm to 100 nm. Catalyst particle sizes between 0.5 and 1.5 mm allow growth of single wall nanotubes. Catalyst particle sizes between 1.5 and 100 nm allow growth of multi wall nanotubes-

The catalyst particles might also be mounted on top of Silicone substrate whereas the Si has a 3D printed shape

By providing a sharp edge between the catalyst particles by 3D printing it is possible to grow graphene in a vertical manner between the nanotubes. In this manner the graphene connects the nanotubes (sp² binding between the nanotubes and graphene) so that the nanotubes are further strengthened.

The printed catalyst can be bent from 0 to 180 degrees, in particular 0 to 90 degree thus controlling the direction of the growing carbon. Controlled nanotubes growing angle leads to the controlled the van der Waals interaction between nanotubes in yarns resulting in the enhanced performance in the using nanotubes yarn as a reinforcement in composite materials.

### Catalyst

For synthesizing CNTs, typically, nanometer-size metal particles are required to enable hydrocarbon decomposition at a lower temperature than the spontaneous decomposition temperature of the hydrocarbon. Most commonly used metals are Fe, Co, Ni, because of two main reasons:
(i) high solubility of carbon in these metals at high temperatures;
(ii) high carbon diffusion rate in these metals. Besides that, high melting point and low equilibrium-vapor pressure of these metals offer a wide temperature window of CVD for a wide range of carbon precursors.

Recent considerations are that Fe, Co, and Ni have stronger adhesion with the growing CNTs (than other transition metals do) and hence they are more efficient in forming high-curvature (low diameter) CNTs such as SWCNTs (Ding et al., 2008). Solid organometallocenes (ferrocene, cobaltocene, nickelocene) are also widely used as a CNT catalyst, because they liberate metal nanoparticles in-situ which catalyze the hydrocarbon decomposition more efficiently.

Apart from the popular transition metals (Fe, Co, Ni), other metals of this group, such as Cu, Au, Ag, Pt, Pd were also found to catalyze CNT growth from various hydrocarbons. Thus, the catalyst materials may be selected from Fe, Co, Ni, Cu, Pt, Pd, Mn, Mo, Cr, Sn, Au, Mg, Al, with Fe, Co, Ni being the preferred ones.

In another embodyment alloys such as Co-Mo, Ni-Mo or Fe-Co catalyst are suitable catalysts. Alloys are proven to have a higher catalytic activity than pure metals. For example, highly active crystallographic phases of Co-Mo and Ni-Mo have been achieved on MgO support.

A metal-free CNT growth is also possible.

It is a general experience that the catalyst-particle size dictates the tube diameter. Hence, metal nanoparticles of controlled size, pre-synthesized by other reliable techniques, can also be used to grow CNTs of controlled diameter.

Thin films of catalyst coated on various substrates are also proven good in getting uniform CNT deposits

### Third chamber: PECVD reactor

As described above carbon nanotubes and/or graphene are grown on the substrate in the third chamber.

The third chamber comprises at least one gas diffuser, in particular at least one adjustable gas diffuser. The gas diffuser is retractable and go as close as 2 mm from the substrate. Once the substrate rotates or moves further the diffusers retract to prevent destroying or injuring the plasma creating device.

In a further embodiment the at least one gas diffuser is provided with at least one gas flow sensor. In particular, the gas diffuser has an integrated gas flow control senor and can send the gas vertically on the substrate or it can send the gas from left to right or right to left. The carbon-containing and reacting gases are introduced into the third chamber through a network of mass flow controllers allowing to regulate the flow rate and gas composition of the mixture

In another embodiment there is at least one electrode provided in the third chamber in close proximity to the substrate for applying a electromagnetic power for gas ionization resulting in plasma formation. For example, microwave or radio frequency generator for generating a plasma through low pressure reactant gas discharge.

The production of carbon nanotubes and/or graphene is performed at a temperature within a range of 400 to 1200°C, preferably 600 to 900°C, more preferably 700 to 750°C. In general the process temperature depends on the material and product requirements.

The precursor reacting gas will be adjusted to go on the substrate 90 degrees on the substrate or from left to right or right to left depending on application. The energy from heating the substrate and from the electromagnetic power plasma causes decomposition of the gas into fractions, such as carbon containing fractions, and the carbon nanotube array grows, the process can take from minutes to hours depending on length and quality needed for product or application. Raman Spectroscopy system for monitoring carbon nanotube and/or graphene deposition may be integrated.

Suitable precursor gases as CNT sources may include hydrocarbons, such as methane, ethane, ethylene, propane, propylene, acetylene and combinations thereof; organic compounds, especially from polymers, like polyacrylonitrile, polypyrrole, polyphenyl acetylene, tripropylamine, tetrapropylammonium hydroxide; amino-dichloro-s-triazine, or plant-based material: camphor, turpentine, eucalyptos oil, sesame seeds. Further CNT sources may include fuels, such as kerosene or petroleum gas.

When using a liquid hydrocarbon (such as benzene, alcohol, etc.) as CNT source, the liquid is heated in a flask and an inert gas is flushed through it, which in turn leads the hydrocarbon vapor into the reaction zone. If a solid hydrocarbon is used as a CNT precursor, it can be kept directly in the low temperature zone of the reaction tube. Volatile materials (camphor, naphthalene, ferrocens, etc.) evaporate (sublimate) directly from solid state to gas and perform CVD as they pass over the catalyst held in the high temperature zone.

The exact growth mechanism of CNT formation is not yet precisely known, however it is likely that carbon from the precursor gas dissolves in the catalyst until it is supersaturated, at which point the carbon is precipitated out of the catalyst in the form of a carbon nanotubes or graphene. The reason the nanotubes/carbon stops growing is structural change in the catalyst particles. That is why adding chemicals such as gadolinium (GD) but not limited to helps stop the structural change in the catalyst particle and the nanotubes can grow up to 14 cm within 24 hours.

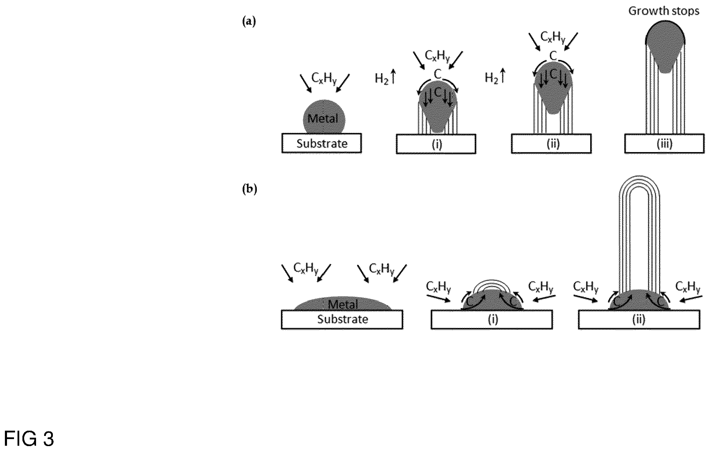

When a hydrocarbon vapor meets the "hot" metal nanoparticles, it first decomposes into carbon and hydrogen species; hydrogen flies away and carbon gets dissolved into the metal (as illustrated in Fig 3 a). After reaching the carbon-solubility limit in the metal at that temperature, as-dissolved carbon precipitates out and crystallizes in the form of a cylindrical network having no dangling bonds and hence energetically stable. Hydrocarbon decomposition (being an exothermic process) releases some heat to the metal's exposed zone, while carbon crystallization (being an endothermic process) absorbs some heat from the metal's zone. This precise thermal gradient inside the metal particle keeps the process going.

In the other case, (Fig. 3b) when the catalyst-substrate interaction is strong (metal has an optimized contact angle with the substrate), initial hydrocarbon decomposition and carbon diffusion take place similar to that in the tip-growth case, but the CNT precipitation fails to push the metal particle up; so the precipitation is compelled to emerge out from the metal's apex. At first, carbon crystallizes out as a hemispherical dome (the most favorable closed-carbon network on a spherical nanoparticle) which then extends up in the form of seamless graphitic cylinder. Subsequent hydrocarbon decomposition takes place on the lower peripheral surface of the metal, and as-dissolved carbon diffuses upward. Thus, CNT grows up with the catalyst particle rooted on its base; hence, this is known as "base-growth model".

### Fourth chamber: collection

As mentioned previously, the fourth chamber serves for collecting the carbon nanotubes from the substrate and optionally spinning the carbon nanotubes into a yarn. Thus, the at least one fourth chamber comprises means for harvesting the carbon nanotubes and means for spinning a yarn from said carbon nanotubes.

In one embodiment, the grown carbon nanotube array can be treated with a polymer spray, such as an activated binder gas, before being pulled or spun to a thread. The chamber can be filled with binding gasses such as argon, nitrogen that increase the Van Der Waals forces. It is however also possible that the finished array is directly doped in the third chamber number 3 with hydrogen, oxygen, argon, etc. in the plasma before turning to the fourth chamber.

In a further embodiment the harvesting, spinning and collection will take place by electrospinning. CNT arrays produced by PECVD have an oriented fiber structure. Electrospinning is a simple and effective method for producing superfine and continuous fibers with a diameter of approximately several microns to some ten nanometers. This method uses electromagnetic forces.

It is also possible to use as an example but not limited to. A rotating hook, compressed gas, magnetism and or centrifugal force (cotton candy machine principle) for collecting the nanotube array of the substrate.

In addition to the cleaning chamber, coating chamber, growing chamber and collecting / harvesting chamber further stations or chambers are provided in further embodiments.

Thus, several other chambers may be attached such as heating and cooling chambers, maintenance/inspection chamber with hatch, braiding chamber for braiding the yarn to the desired with and chamber for spinning the carbon nanotubes into a yarn.

In one embodiment, between cleaning chamber and coating chamber an additional spare station or load-lock may be provided. This spare station can be used for additional purposes, such as for introducing or removing substrates in case that may be necessary.

Subsequent to the growing chamber, a cooling chamber or cooling station may be arranged. Since the temperature in the growing chamber (PECVD station) may be high, such as 600-800°C, it is of an advantage to enhance cooling. The cooling effect may be created by convection within the cooling station, because it is isolated from the rest of the other stations.

In a further embodiment, the device might have a chamber for visual/manual/automatic inspection and changing out substrates.

The device might have an inbuilt braiding machine that interlaces three or more strands of the produced yarn or wire to create a variety of materials, including rope, reinforced hose, covered power cords, and some types of lace.

The device might have a cooling chamber for raptly cooling using as an example but not limited to an evaporative cooler (also evaporative air conditioner, swamp cooler, swamp box, desert cooler and wet air cooler) is a device that cools air through the evaporation of fluids

The device might have a chamber for printing/embedding the catalyst particles on the substrate. Printing is a process for mass reproducing catalyst particles and shapes using a master form or template

The device might have an extra heating chamber for treating the spun yarn with a high temperature heater that is using as an example but not limited to boron gas to fuse the freestanding nanotube array or nanotube yarn into physical contact with each other and treating the materials to provide fused structures with dense aggregations of covalent bonds connecting the nanoparticles to each other.

### Exhaust system

In another embodiment of the present device there is an exhaust system mounted on each side of the walls in the chambers and each chamber has an electronic valve that can control the exhaust direction for better control of the gas flow.

### Artificial Intelligence (Al)

The present device / apparatus is preferably operated using means for controlling the system and tools of artificial intelligence (Al). In one embodiment the present device comprises a controller configured to operate any of the chambers in the device, in particular to adjust the process parameters within the chambers.

The device and process are controlled by gas flow control sensors and dampers, the vapors are electronically controlled by the Al and can control if the gas can go into both chambers or one chamber, thus controlling the direct injection of methane closer to the discharge that allows one to significantly increase the carbon growth rate, and by additionally controlling the exhaust valves in the cambers, we are increasing the production yield

The Al will assist with controlling parameters in the machine in combination of hardware. The Al will control heaters, gas flow direction, gas mixture, IR cameras (for monitoring growth) Raman system, exhaust system, coating. Deep learning differs from traditional machine learning techniques in that they can automatically learn representations from data such as images, videos or text, without introducing hand-coded rules or human domain knowledge which is a huge advantage in our innovative production unit. As we place sensors and cameras it can learn directly from raw data and can increase its predictive accuracy when provided with more data. The production unit is planned with high resolution camera. The thermal imaging camera is designed for non-contact temperature measurement of hot metals in the 450°C to 1800°C range with a CMOS sensor. It will be connected to the Computer vision app. Computer vision apps use deep learning to gain knowledge from digital images and videos.

The Al is the integrated software and hardware system that supports the commitment to Al research with an optimized combination of compute power, software, and deep learning performance

The invention is explained in the following by means of examples with reference to the Figures. It shows:
- Figure 1: a schematic view of a first embodiment of the device according to the invention;
- Figure 2a: a schematic view of an arrangement of catalyst particles on a substrate;
- Figure 2b: a schematic view of growth direction of carbon nanotubes depending on the catalyst particle;
- Figure 2c: a schematic view of a product obtained in a process according to the invention comprising graphene sheets connected to carbon nanotubes;
- Figure 3: growth mechanisms for CNTs: (a) tip-growth model, (b) base-growth model;
- Figure 4: a schematic view of collecting carbon nanotube fibers by electro spinning, and
- Figure 5: a schematic overview of a second embodiment of the device according to the invention.

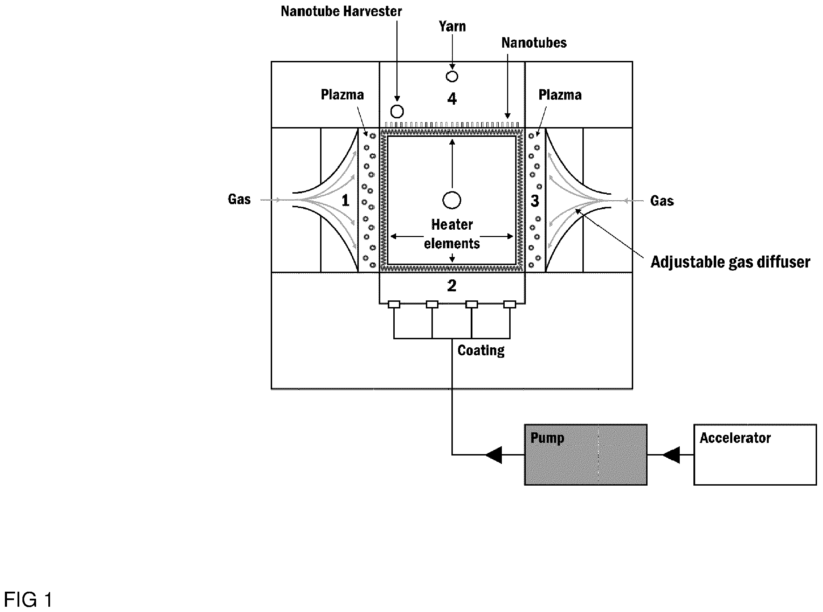

Figure 1 illustrates an embodiment of the device according to the invention.

The device 10 comprises at least four chambers 11, 12, 13, 14 that enable the production of carbon nanotubes and graphene, wherein the nanotubes are linked by graphene sheets. These products can be collected and can be spun into a thread.

The carbon nanotubes are grown on a substrate 15. The substrate 15 is arranged on a support 16 that is rotatable mounted such that the substrate is rotated and transported through each of the chambers 11-14 of the device.

The substrate 15 are sheets. The top substrate 15 can be anything e.g. quartz, alloys, metals, ceramics, fibers etc. As long as it has some form of catalyst particles on it.

The support 16 has attached the heater elements and heats the "top" substrate 15 to a temperature shown to produce carbon nanotubes (700 to 750°C depending on process and chemistry).

The process always starts with pumping down the reactor comprising the four chambers to a low base pressure to evacuate atmospheric gasses.

Gas, such as tetrafluormethane (CF₄) or sulfur hexafluoride (SF₆), oxygen and/or argon or hydrogen gas is pumped into the first chamber 11 for cleaning the substrate 15. A electromagnetic power source is applied to the electrode above the substrate causes an ionization of the gases, resulting in plasma formation that cleans the substrate, this process can vary from 2 seconds to 10 minutes depending on degree of contamination, the gas and the plasma will be shut off when substrate is properly cleaned. The cleaned substrate then rotates to third chamber 12.

The second chamber 12 is the coating room. Pneumatic nozzles are connected to a fluid reservoir and a pressure pump is used for coating the substrate with accelerator fluid. The second pump can have several reservoirs containing different types of accelerator fluids, the accelerator can have catalyst particles spraying on the substrate.

There are two scenarios. Scenario number 1: If the substrate is "preprinted" or imbedded with a pattern, the substrate will only be coated with accelerator fluid. Scenario number 2: If the substrate is plane (without 3D printed pattern) the substrate can be coated with a sticky accelerator fluid and a catalyst metal/alloy that has been shown to act as a catalyst such as Ni, Fe, Co, or nonmetallic particles such as nano diamonds, quartz or a combination thereof. The substrate then turns over to third chamber number 13.

The carbon-containing and reacting gases are introduced into the third chamber 13 through a network of adjustable gas diffusers and mass flow controllers allowing to regulate the flow rate and gas composition of the mixture. An electromagnetic power source is applied to the electrode above the substrate that causes an ionization of the gases, resulting in plasma formation. The precursor gas will be adjusted to go on the substrate on from left to right or right to left depending on application. The energy from heating the substrate and from the high-voltage plasma causes decomposition of the gas into its components and the array grows, the process can take from minutes to hours depending on length and quality needed for end product or application.

The following table illustrates different process conditions that may be applied in the third chamber for carbon growth. CH₄ is used as carbon containing gas, hydrogen and argon are used as plasma gases.

| No. | CH₄ (sccm) | H₂ (sccm) | Ar (sccm) | Electromagnetic power | Duty cycle respectively | Temperature (°C) | Pressure (mbar) |
|---|---|---|---|---|---|---|---|
| 1 | 800 | 700 | 200 | 5 | 100% | 750 | 0.26 |
| 2 | 900 | 500 | 450 | 5 | 100% | 700 | 0.3 |
| 3 | 800 | 800 | 400 | 5 | 100% | 800 | 0.25 |
| 4 | 500 | 1200 | 250 | 5 | 80% | 600-800 | 0.21 |
| 5 | 750 | 800 | 300 | 5 | 95% | 650 | 0.33 |
| 6 | 450 | 900 | 225 | 5 | 100% | 725 | 0.24 |
| 7 | 600 | 1400 | 400 | 5 | 75% | 900 | 0.22 |
| 8 | 1000 | 725 | 400 | 5 | 50% | 750 | 0.23 |
| 9 | 400 | 500 | 50 | 5 | 100% | 750 | 0.40 |
| 10 | 400 | 700 | 0 | 5 | 100% | 650 | 0.2 |
| 11 | 400 | 550 | 0 | 5 | 60% | 650-700 | 0.21 |
| 12 | 800 | 650 | 100 | 5 | 40% | 800 | 0.24 |
| 13 | 650 | 900 | 200 | 5 | 45% | 700 | 0.27 |
| 14 | 400 | 600 | 0 | 5 | 100% | 600 | 0.19 |
| 15 | 400 | 700 | 500 | 5 | 100% | 650 | 0.23 |

The yield of CNTs (defined as the weight ratio) increases significantly with the gas pressure, reaches 600% at 600Torr, then decreases with further increase of gas pressure. At low reacting gas pressure the CNTs have completely hollow cores, whereas at high pressure the CNTs have a bamboo structure. The density of the compartments in the bamboo-structured CNTs increases dramatically with the increase of the gas pressure. This result shows that the structure and yield of carbon nanotubes are strongly affected by the growth gas pressure. The impact of reaction parameters like reaction temperature, reaction time, concentration of H₂, and flow rate ratio (CH₄: H₂) plays a major role in deciding the types of CNTs formation, and its yield. Morphological structure of CNTs have also been found to depend much on the reaction temperatures, reaction time, and CH₄ to H₂ gas ratio. It was reported that there is an increase in diameter of SWNTs, MWNTs, and CNTs formed as the reaction is enriched in nitrogen atmosphere. On the other hand, pure SWNT can be obtained with Ar atmosphere. The reaction time influence the morphology and diameter of CNTs at different temperatures (800°C and 900°C). It was concluded that at 900°C, CNTs and carbon nanowires (CNWs) could be obtained in high density rather than at 800°C.

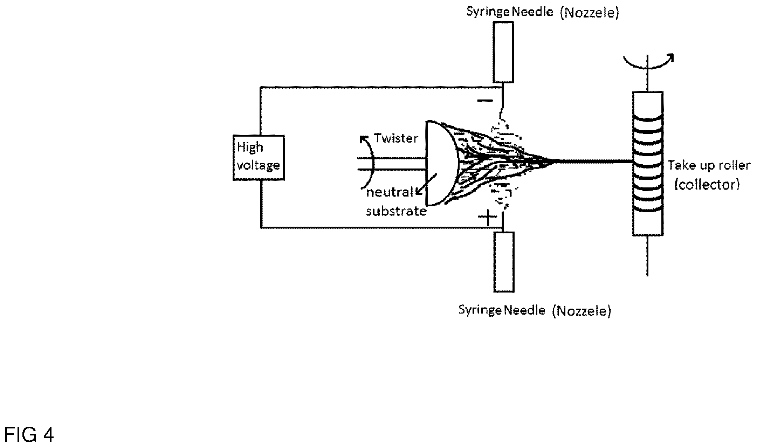

In the fourth chamber 14 (see also Fig. 4) the carbon nanotube / graphene array will be collected using an electro spinner or a rotating hook that is collecting and spinning the carbon nanotube / graphene array to a thread. The array can also be pre coated with a polymer and can contain a mixture of activated binding gasses for increasing the binding of the nanotubes, the more we spin the yarn the stronger it gets, and the stronger it gets the less conductive it gets. The amount of twists will depend on the application.

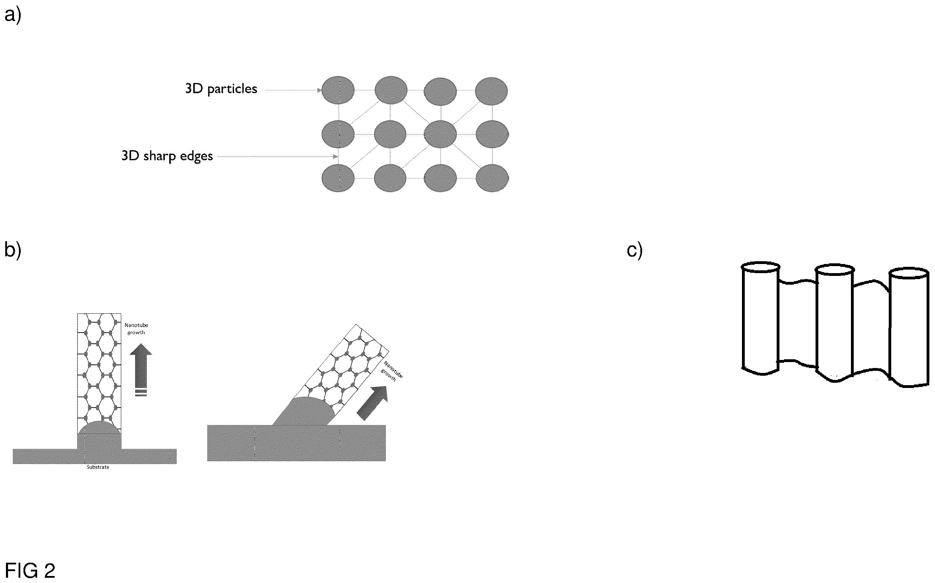

The catalyst particles can be imbedded on the substrate surface. By nanoprinting printing, laser engravement, casting, molds, eating, sputtering to mention a few but not limited to the catalytic particles on the substrate, it is possible to control the catalyst particle sizes from 0.5 nm to 100 nm. Catalyst particle sizes between 0.5 and 1.5 mm allow growth of single wall nanotubes. Catalyst particle sizes between 1.5 and 100 nm allow growth of multi wall nanotubes (see Fig. 2a, b). The printed catalyst can be bent from 0 to 90 degrees thus controlling the direction of the growing carbon. It is also possible to angle the catalyst particle from 0 to 180 degrees which gives a higher Van Der Waals interaction.

By providing a sharp edge between the catalyst particles (for example by tying the catalyst particles with a sharp edge of 0.5 nm) it is possible to grow graphene in a vertical manner between the nanotubes. In this manner the graphene connects the nanotubes (sp² binding between the nanotubes and graphene) so that the nanotubes are further strengthened (see Fig. 2b, c).

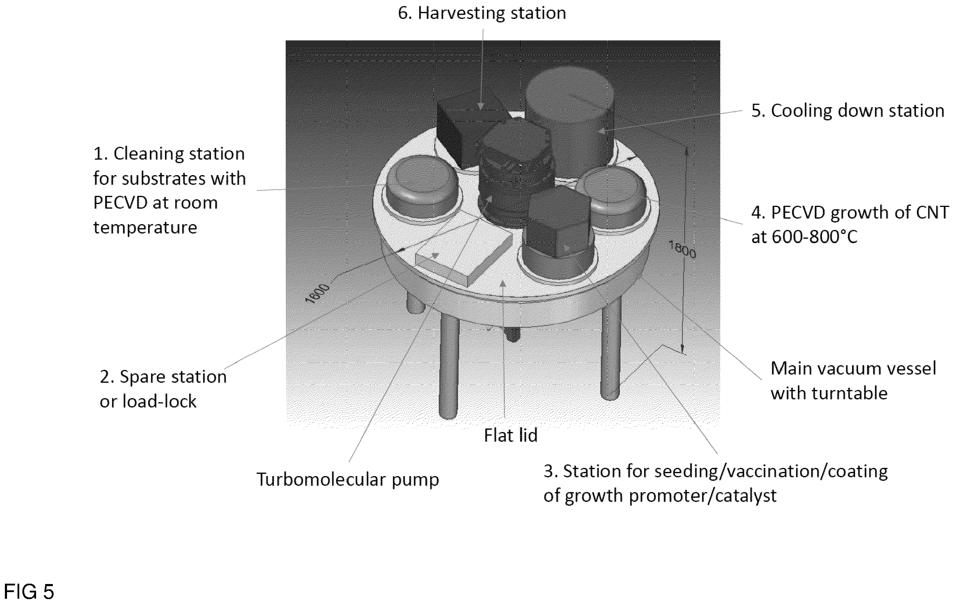

Figure 5 illustrates a further embodiment of the device according to the invention. In addition to the cleaning chamber, coating chamber, growing chamber and collecting / harvesting chamber further stations or chambers are provided.

Between cleaning chamber and coating chamber an additional spare station or load-lock may be provided. This spare station can be used for additional purposes, such as for introducing or removing substrates in case that may be necessary.

Subsequent to the growing chamber, a cooling chamber or cooling station may be arranged. Since the temperature in the growing chamber (PECVD station) may be high, such as 600-800°C, it is of an advantage to enhance cooling. The cooling effect may be created by convection within the cooling station, because it is isolated from the rest of the other stations.

## Claims

1. Device (10) for producing carbon nanotubes, graphene and/or a combination thereof, said device comprising:
- at least one first chamber (11) for cleaning a substrate (15) using plasma cleaning;
- at least one second chamber (12) for coating the substrate (15) with at least one accelerator fluid and/or optionally at least one catalyst;
- at least one third chamber (13) for growing carbon nanotubes on the coated substrate (15), and
- at least one fourth chamber (14) for collecting the carbon nanotubes from the substrate (15) and optionally spinning the carbon nanotubes into a thread,
wherein the chambers (11-14) are arranged to each other around a vertical or horizontal axis of symmetry,
wherein the substrate (15) is arranged on a support structure (16) that is able to rotate around said axis such that the substrate (15) is transported subsequently through each of the chambers (11-14) during one full rotation of the support structure (16).

2. Device according to one of the preceding claims, **characterized in that** the surface of the at least one substrate (15) comprises sharp edges, in particular due to catalyst particles embedded in the surface of the substrate.

3. Device according to one of the preceding claims, **characterized in that** the at least one substrate (15) is made of multiple layers of high temperature polymer, carbon fibers, metal, or metal alloys, quartz, silicon, silicon carbide, silica, alumina, alumino-silicate (zeolite), CaCO₃, magnesium oxide.

4. Device according to one of the preceding claims, **characterized in that** at least one nozzle, preferably at least pneumatic nozzle, for coating the at least one substrate (15) with at least one accelerator fluid is arranged in the second chamber (12).

5. Device according to claim 4, **characterized in that** the at least one nozzle is connected to a fluid reservoir and a pressure pump.

6. Device according to one of the preceding claims, **characterized in that** at least one accelerator fluid contains catalyst particles.

7. Device according to one of the preceding claims, **characterized in that** at least one gas diffuser, in particular at least one adjustable gas diffuser, is provided in the third chamber (13).

8. Device according to claim 7, **characterized in that** the at least one gas diffuser is provided with at least one gas flow sensor.

9. Device according to claim 7 or 8, **characterized in that** at least one electrode is provided in close proximity to the substrate for applying an electromagnetic power for gas ionization resulting in plasma formation.

10. Device according to one of the preceding claims, **characterized in that** the at least fourth chamber (14) comprises means for harvesting the carbon nanotubes and means for spinning a yarn from said carbon nanotube array.

11. Device according to one of the preceding claims, **characterized by** a controller configured to operate any of the chambers (11,12, 13, 14), in particular to adjust the process parameters within the chambers.

12. Device according to any of the preceding claims, **characterized in that** the electromagnetic power sources may be DC or AC current sources, electromagnetic waves of frequencies in acoustic range (several Kilohertz), radiofrequency range (several Megahertz) both capacitively coupled or inductively coupled to the plasma discharge or electromagnetic waves of wavelengths smaller than the dimensions of the device such microwave power in the Gigahertz range.

13. Process for producing carbon nanotubes, graphene and/or a combination thereof by means of a device according to one of the preceding claims, said process comprising:
- providing at least one substrate in the first chamber (11) and cleaning the surface of the substrate by plasma cleaning;
- transporting / rotating the at least one substrate from the first chamber (11) to the second chamber (12);
- coating the surface of the at least one substrate with at least one accelerator fluid and optional with at least one catalyst in the second chamber (12);
- transporting / rotating the at least one coated substrate from the second chamber (12) to the third chamber (13);
- growing carbon nanotubes and/or graphene on the coated surface of the at least one substrate by applying plasma-enhanced chemical vapor deposition (PECVD) by adding at least one carbon-containing gas to the third chamber (13);
- transporting / rotating the at least one substrate from the third chamber (13) to the fourth chamber (14);
- collecting the grown carbon nanotubes and/ graphene array from the substrate (15) and optionally spinning the carbon nanotubes into a yarn in the fourth chamber (14).

14. Process according to one of claims 13, **characterized in that** the production of carbon nanotubes and/or graphene is performed at a temperature within a range of 400 to 1200°C, preferably 500 to 900°C, more preferably 700 to 750°C.

15. Array of Carbon nanotube or graphene and/or a combination thereof obtainable in a method according to one of claims 13-14.
